# EUROPEAN PATENT SPECIFICATION

(11) **EP 2 975 262 B1**
(45) Date of publication and mention of the grant of the patent: **26.12.2018**
(21) Application number: 15175388.6
(22) Date of filing: 06.07.2015
(51) Int. Cl.: F03D 1/06, F03D 13/00, F03D 80/80

(54) **Wind power generation facility**
WINDENERGIEERZEUGUNGSANLAGE
INSTALLATION DE GÉNÉRATION D'ÉNERGIE ÉOLIENNE

(30) Priority: 15.07.2014 JP 2014144863
(43) Date of publication of application: 20.01.2016
(73) Proprietor: Hitachi, Ltd., Tokyo 100-8280 (JP)
(72) Inventor: TOBINAGA, Ikuo, Tokyo, 100-8280 (JP); ISHIGURO, Kouta, Tokyo, 100-8280 (JP)
(74) Representative: MERH-IP Matias Erny Reichl Hoffmann Patentanwälte PartG mbB

(56) References cited:
- EP-A2- 2 653 719
- EP-A2- 2 706 226
- WO-A1-2012/080350

## Description

### FIELD OF THE INVENTION

The present invention relates to a hub and its peripheral structure in a wind power generation facility.

### BACKGROUND OF THE INVENTION

In recent years, wind power generation attracts attention as an environment-friendly and low-risk power generation technology. In the wind power generation, in comparison with conventional thermal power generation and nuclear power generation, greenhouse gas such as carbon dioxide is not discharged. Further, there is no potential risk of radioactive contamination and exposure.

On the other hand, wind is characterized by its instability. That is, wind direction and wind velocity are constantly changed. The change of wind direction is controlled by directional control on a wind turbine (yaw-control). Further, the change of wind velocity is controlled by directional control on a blade mounting angle (pitch control). Thus it is possible to perform control for stable and high-efficient power generation.

Further, the introduction and maintenance of a wind power generation facility cost very much. Accordingly, further cost reduction and safety assurance are required of wind power generation.

For cost reduction regarding the wind power generation facility, reduction of material cost by weight reduction of structural components is effective. Especially, it is very significant to reduce the weight of a rotor. Since the rotor has blades, a hub, and a pitch driving device (a pitch actuator and a slewing bearing), the weight reduction of the rotor also contributes to weight reduction of a nacelle to support these components and a tower to support the nacelle.

Further, when the weight reduction is attained in the nacelle configured with a drive system having a main shaft and a speed increaser, weight reduction is also attained in the tower and the base as supporting structures. Thus it is possible to effectively reduce the costs. Accordingly, efforts are made to downsize and reduce the weight of the hub and the nacelle in development of a wind power generation facility.

The main shaft in the hub and the nacelle has a structure, which is referred to as a main shaft bearing, to rotatably support the hub with a bearing. The main shaft bearings are classified into an outer-ring drive type bearing and an inner-ring drive type bearing in accordance with whether the rotary side is the outer ring or the inner ring.

In an inner-ring drive type wind power generation facility, a technique as disclosed in Japanese Unexamined Patent Application Publication No. 2003-56448 is known. In this publication, "a pitch control mechanism in a horizontal axis wind turbine in which a hub and a rotor having plural blades, pitch-changeably supported with the hub, are rotatably supported with a nacelle" is disclosed. The pitch control mechanism has: plural pitch varying units, respectively provided in the hub in correspondence with the respective blades, to independently perform variable pitch control on the respective blades; a pitch regulation unit to respectively regulate a pitch variable range of the respective blades between a full-feather position and a full-flat position; and a pitch pressing unit to press the respective blades to the full-feather position side. When an abnormality occurs in a pitch control system of the pitch varying unit, rotational locking around the pitch shaft of the corresponding blade is released.

Further, in an outer-ring drive type wind power generation facility, a technique as disclosed in Japanese Unexamined Patent Application Publication No. 2014-29154 is known. In this publication, a "wind driver for power generation" is disclosed. The wind driver has: a tower; a gondola accommodating a power generation mechanism and structure, provided at an upper end of the tower; and rotating equipment including plural wind collecting blades, provided in the gondola. The rotating equipment has: an inner stator fixed to the gondola; a power generator including an outer rotor surrounding the inner stator; a magnetic pole and a coil winding for power generation provided inside the inner stator and the outer rotor in an unostentatious manner; plural supporting cups, each provided on one of the plural wind correcting blades, fixed in the outer rotor of the power generator at equal intervals; and plural blade pitch adjusting hubs each rotatably mounted in each of the plural supporting cups. The plural wind collecting blades are respectively connected to any one of the plural blade pitch adjusting hubs.

The European Patent Application EP 2 706 226 A2 shows a wind turbine system and a connection way between a hub and a main shaft. It shows further a facilitation of a time optimized assembling of the wind turbine system and a better accessible inner design of the hub for workers / service persons.

Further, the European Patent Application EP 2 653 719 A2 shows a hubs for rotors of wind turbines with improved stiffening features.

As described above, in development of a wind power generation facility, the reduction of costs such as facility introduction cost and power generation cost are under review for establishment of power generation business, and various efforts to attain downsizing and weight reduction of the hub and the nacelle are made.

In the inner-ring drive type wind power generation facility as disclosed in Japanese Unexamined Patent Application Publication No. 2003-56448, the hub has a simple structure. However, it is necessary to provide the main shaft bearing in the nacelle. Accordingly, it is difficult to downsize the nacelle.

On the other hand, in the outer-ring drive type wind . power generation facility as disclosed in Japanese Unexamined Patent Application Publication No. 2014-29154, it is advantageous that the main shaft bearing is provided in the hub for the purpose of downsizing the nacelle. However, it is necessary to prevent interference between - the main shaft bearing and other structural components in the hub. It is difficult to downsize the hub.

The object of the present invention is to provide a wind power generation facility which is capable of downsizing and weight-reducing a hub and a nacelle, and which has excellent economical efficiency and maintainability.

### SUMMARY OF THE INVENTION

To solve the above problem, the present invention provides a wind power generation facility including: a tower installed on the ground or on the sea as a supporting column of a power generator; a nacelle, provided on the tower, that includes the power generator; and a rotor, provided at one end of the nacelle, that has a hub and plural blades to receive wind and convert wind power into rotational energy, wherein the hub includes plural .pitch driving units to change respective angles of the plural blades with respect to the hub, and wherein the plural pitch driving units are respectively provided through an opening provided on a barrier in the hub, wherein the wind power generation facility is an outer-ring drive type wind power generation facility having a cylindrical fixed main shaft (19) connecting the hub and the nacelle (3) via a bearing fixed to an outer shell of the hub, and a main shaft (19) provided through the inside of the fixed main shaft connecting the hub (2) and the power generator, in the hub (2), and the barrier is a bearing support member to fix the bearing to the outer shell of the hub (2), wherein the outer shell of the hub (2) is formed in an appropriately equilateral triangular shape in-a cross section orthogonal to the fixed main shaft (19), and wherein the plurality of pitch driving units are respectively surrounded by the fixed main shaft and adjacent two sides of the approximately equilateral triangular shaped outer shell of the hub (2).

According to the present invention, it is possible to realize a wind power generation facility which is capable of downsizing and weight-reducing a hub and a nacelle, and which has excellent economical efficiency and maintainability.

The other objects, the features and advantages of the present invention may be clear with the following detailed description with reference to the accompanying drawings.

### BRIEF DESCRIPTION OF THE DRAWINGS

FIG. 1 is a partial cross-sectional diagram of a wind power generation facility according to an embodiment of the present invention;
FIG. 2 is an A-A' arrow diagram in FIG. 1;
FIG. 3 is a B-B' arrow diagram in FIG. 1;
FIG. 4A is a partial cross-sectional diagram of a conventional inner-ring drive type wind power generation facility;
FIG. 4B is a C-C' arrow diagram in FIG. 4A;
FIG. 5A is a partial cross-sectional diagram of a conventional outer-ring drive type wind power generation facility;
FIG. 5B is a D-D' arrow diagram in FIG. 5A;
FIG. 6A is a partial cross-sectional diagram of a conventional outer-ring drive type wind power generation facility;
FIG. 6B is an E-E' arrow diagram in FIG. 6A;
FIG. 7 illustrates an overview of a general wind power generation facility; and
FIG. 8 illustrates a configuration of the general wind power generation facility.

### DETAILED DESCRIPTION OF PREFERRED EMBODIMENTS

Hereinbelow, an embodiment of the present invention will be described with reference to the drawings.

### [Embodiment 1]

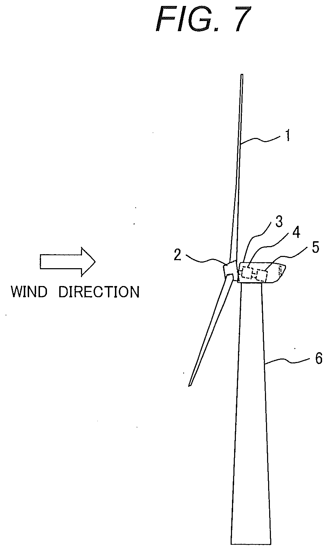

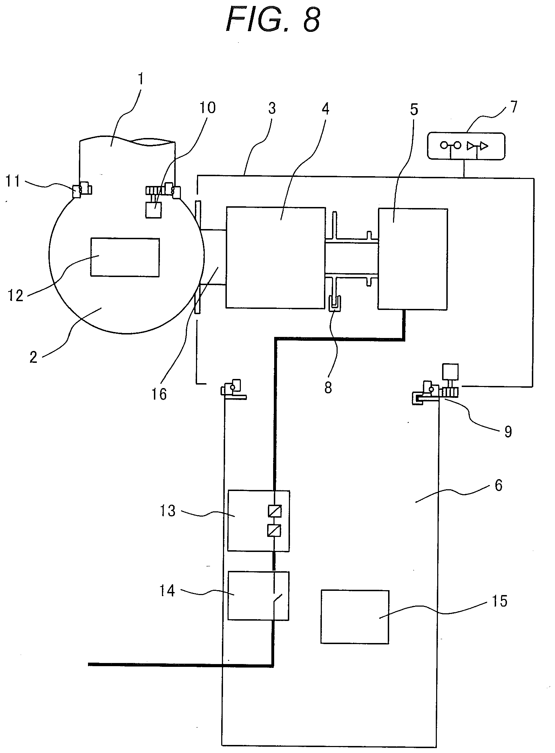

First, a general wind power generation facility will be described using FIGS. 7 and 8. FIG. 7 shows an overview of an upwind type wind power generation facility, and FIG. 8 shows a configuration of the respective elements of the wind power generation facility. Note that in the present embodiment, a wind power generation facility installed on the ground and a wind power generation facility installed on the sea have the same configuration, and accordingly, the wind power generation facility will be described without discrimination between "wind power generation facility on the ground" and "wind power generation facility on the sea".

As shown in FIG. 7, as a wind power generation facility, a nacelle 3 is provided on the top of a tower 6 installed on the ground or on the sea. The nacelle 3 includes a gearbox 4 and a power generator 5.

A rotor having a hub 2 and plural blades 1 is provided at one end of the nacelle 3. The hub 2 is connected to the gearbox 4 and the power generator 5 with a shaft. The plural blades 1 receive wind and rotate together with the hub 2, which converts wind power into rotational energy. The rotational energy is transmitted via the shaft and the gearbox 4 to the power generator 5, to perform power generation.

As shown in FIG. 8, a yaw control mechanism 9 to control the position of the nacelle 3 with respect to the tower 6 is provided in a connecting part between the tower 6 and the nacelle 3. The yaw control mechanism 9 controls the direction of the wind turbine i.e. the direction of the rotor having the plural blades 1 and the hub 2 in correspondence with change of wind direction so as to receive a maximum quantity of wind with the rotor having the plural blades 1 and the hub 2.

Further, a pitch control mechanism (a pitch actuator 10 and a pitch slewing bearing 11) to independently control a mounting angle (pitch angle) of each blade with respect to the hub is provided in a connecting part between the hub 2 and the blades 1. The pitch control mechanism controls the mounting angle (pitch angle) of each blade 1 with respect to the hub 2 in correspondence with change of wind velocity. The pitch actuator 10 is controlled with a pitch control device 12 in the hub 2.

The hub 2 is connected to a main shaft 16. The main shaft 16 is connected to the gearbox 4 in the nacelle 3. The gearbox 4 is connected to the power generator 5 with the shaft. A rotor brake 8 is provided between the gearbox 4 and the power generator 5. When the wind power generation facility is stopped, the rotor brake 8 is actuated, to stop or decelerate the rotation of the rotor i.e. the hub 2 and the plural blades 1.

An anemoscope/anemometer 7 is provided outside the nacelle 3. Wind direction data and wind velocity data measured with the anemoscope/anemometer 7 are transmitted to a wind turbine control panel 15. The wind turbine control panel 15 controls a yaw control mechanism 9 and the pitch control mechanism. As described above, the pitch control mechanism has the pitch control device 12, the pitch actuator 10, and the pitch slewing bearing 11.

The electric power generated with the power generator 5 is supplied, via an electric power control device 13 and a main circuit breaker 14 provided in the tower 6, to an external electric power supply system.

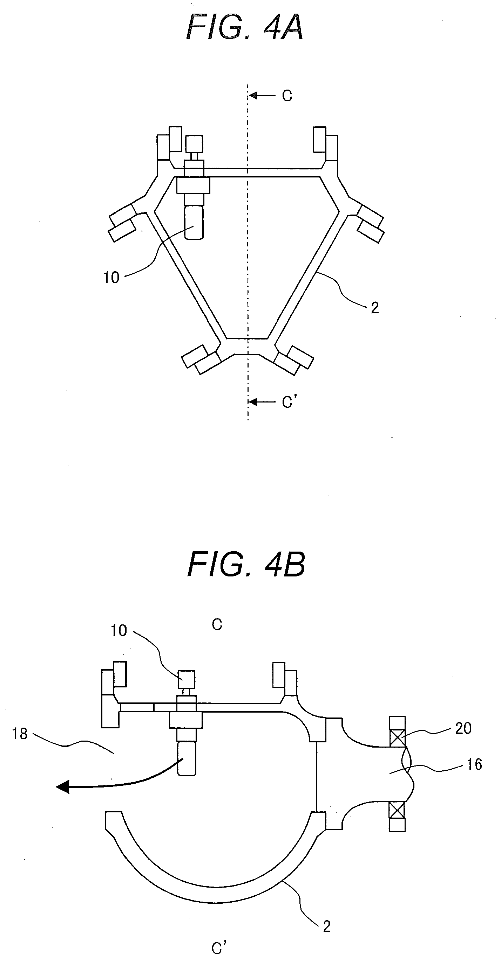

Next, the object of the present invention will be described in detail using FIGS. 4A to 6B.

FIGS. 4A and 4B show the hub and its peripheral structure in an inner-ring drive type wind power generation facility. FIG. 4B is a C-C' arrow diagram in FIG. 4A.

As shown in FIG. 4B, the hub 2 is connected to the main shaft 16. The main shaft 16 is supported with a main shaft bearing 20, and rotates inside the main shaft bearing 20. Accordingly, the wind power generation facility is generally called as an inner-ring drive type wind power generation facility. The main shaft bearing 20 is provided in the nacelle 3.

As shown in FIG. 4A, the pitch actuator 10 is provided on the outer shell of the hub 2. Although not shown, a pitch slewing bearing of the respective blades and a pinion gear of the pitch actuator 10 are engaged with each other. The angles of the respective blades with respect to the hub 2 are changed by driving the pitch actuator 10.

Further, an opening 18 is provided in the outer shell of the hub 2. Upon occurrence of failure or periodical replacement of the pitch actuator 10, the pitch actuator 10 is carried out from the hub 2 via the opening 18.

As shown in FIGS. 4A and 4B, since the inner-ring drive type wind power generation facility has the main shaft bearing 20 outside the hub 2, the inner structure of the hub 2 is comparatively simple. However, as described above, since it is necessary to provide the main shaft bearing 20 in the nacelle 3, it is difficult to attain downsizing and weight reduction of the nacelle 3.

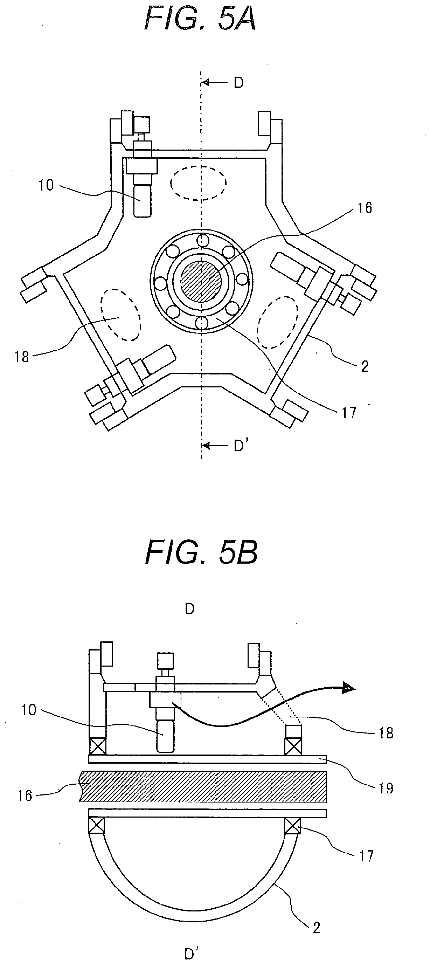

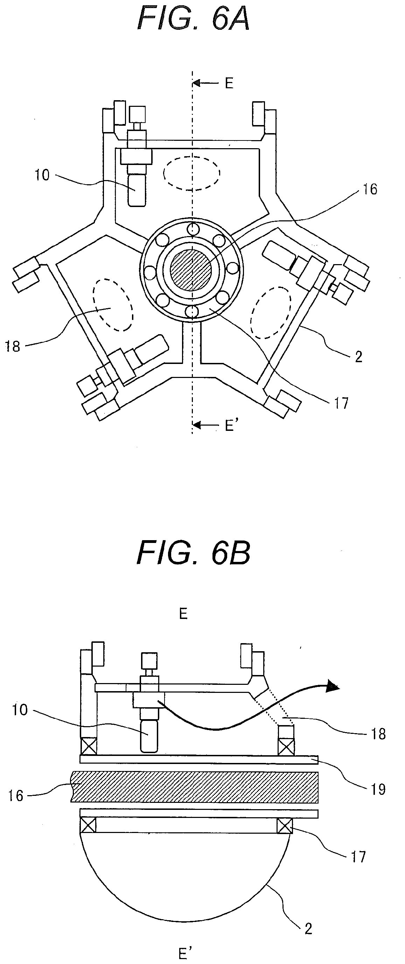

FIGS. 5A to 6B show the hub and its peripheral structure in an outer-ring drive type wind power generation facility. FIG. 5B is a D-D' arrow diagram in FIG. 5A. FIG. 6B is an E-E' arrow diagram in FIG. 6A. As it is apparent from comparison between FIG. 5A and FIG. 6A, the difference between the hub structure shown in FIGS. 5A and 5B and the hub structure shown in FIGS. 6A and 6B is presence/absence of a barrier connecting the fixed main shaft bearing 17 and the outer shell of the hub 2. The barrier connecting the fixed main shaft bearing 17 and the outer shell of the hub 2 functions as a support member to support-fix the fixed main shaft bearing 17 in the hub 2.

As shown in FIG. 5A and 5B, in the hub 2 of the outer-ring drive type wind power generation facility, a fixed main shaft 19 is provided through the hub 2 in the vicinity of a central part in the hub 2. The fixed main shaft 19 is supported with the fixed main shaft bearing 17.

The fixed main shaft 19 is formed in a hollow cylindrical shape. The main shaft 16 is provided through the inside of the fixed main shaft 19.

Although not shown, the main shaft 16 is connected to the hub 2. When the hub 2 receives wind and rotates, the main shaft 16 also rotates. The main shaft 16 is connected to the power generator 5 via the gearbox 4 in the nacelle 3. The main shaft 16 transmits the rotation of the hub 2 to the power generator 5. Thus electric power is generated.

Note that the opening 18 is provided in the outer shell of the hub 2. Upon occurrence of failure or periodical replacement of the pitch actuator 10, the pitch actuator 10 is carried out from the hub 2 via the opening 18.

In the hub 2 of the outer-ring drive type wind power generation facility shown in FIGS. 6A and 6B, the configuration and the operation are the same.

The fixed main shaft 19 is fixed to the nacelle 3. The hub 2 supported with the fixed main shaft bearing 17 rotates outside the fixed main shaft bearing 17. Accordingly, the wind power generation facility is generally called an outer-ring drive type wind power generation facility.

In the outer-ring drive type wind power generation facility shown in FIGS. 5A to 6B, the bearing is provided in the hub 2. Thus it is not necessary to provide the bearing in the nacelle 3, and it is advantageous for downsizing and weight reduction of the nacelle. However, since it is necessary to provide the bearing in the hub 2, it is difficult to attain downsizing and weight reduction of the hub 2.

Especially, when a barrier and a supporting member of the fixed main shaft bearing 17 are provided in the hub 2 as shown in FIG. 6A, when the hub 2 is downsized, the structures in the hub 2 such as the barrier and the supporting member of the fixed main shaft bearing 17 interfere with the pitch actuator 10. It is impossible to downsize the hub 2.

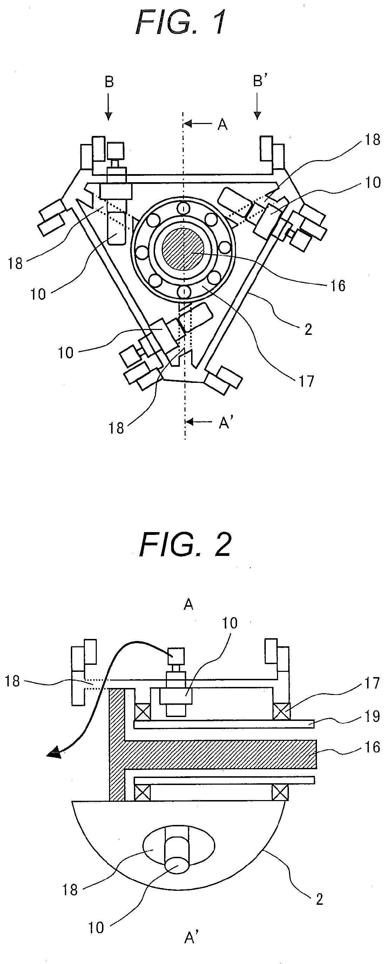

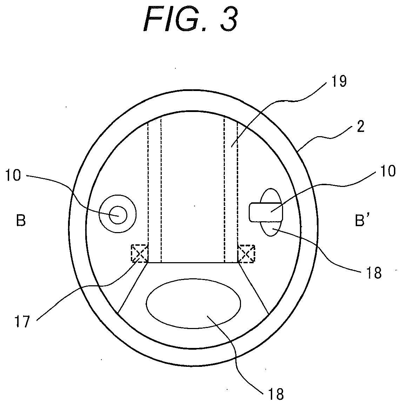

An embodiment of the present invention will be described using FIGS. 1 to 3. FIG. 1 shows a hub and its peripheral structure of a wind power generation facility according to the present embodiment. FIG. 2 is an A-A' arrow diagram in FIG 1. FIG. 3 is a B-B' arrow diagram in FIG. 1.

As shown in FIG. 1, the plural pitch actuators 10 are fixed to the outer shell of the hub 2. The pitch actuators 10 are provided through the structures such as the barrier and the supporting member of the fixed main shaft bearing 17 in the hub 2. That is, the structures such as the barrier and the supporting member of the fixed main shaft bearing 17 are respectively provided with the opening 18. The pitch actuator 10 is provided through the opening 18.

Further, as shown in FIG. 1, the outer shell of the hub 2 is formed in an approximately equilateral triangular shape. That is, the outer shell of the hub 2 has an approximately equilateral triangular shape in a cross section orthogonal to the main shaft 16, the fixed main shaft bearing 17, and the fixed main shaft 19.

In the hub 2, the respective pitch actuators 10 are surrounded by the main shaft 16, the fixed main shaft bearing 17, the fixed main shaft 19, and adjacent two sides of the approximately equilateral-triangular shaped outer shell of the hub 2.

Further, the structures in the hub 2 such as the barrier and the supporting member of the fixed main shaft bearing 17 are provided on the outer shell of the hub in the vicinity of an intermediate position between adjacent blades of the plural blades connected to the hub 2.

In the hub 2 having the above internal configuration, it is possible to form the hub 2 as compactly as possible without interference among the structures such as the plural pitch actuators 10, the main shaft 16, the fixed main shaft bearing 17, the fixed main shaft 19, the barrier and the supporting member of the fixed main shaft bearing 17.

A configuration of the hub 2 according to the present embodiment viewed from another direction will be described using FIG. 2.

As shown in FIG. 2, in the hub 2, a connecting part between the hub 2 and the main shaft 16 is provided closer to a center than an end of the hub 2. Further, the outer shell of the hub 2 and the structures in the hub 2 such as the barrier and the supporting member of the fixed main shaft bearing 17 are respectively provided with the opening 18. Upon occurrence of failure or periodical replacement of the pitch actuator 10, the pitch actuator 10 is carried out from the hub 2 via these openings 18.

Note that in FIG. 2, it may be arranged such that the plate thickness of the outer shell of the hub 2 in the connecting part between the main shaft 16 and the hub 2 is thicker than the plate thickness of the other parts for reinforcement, and the plate thickness of the outer shell in the other parts is thinner. With this arrangement, it is possible to reduce the weight of the hub 2 as much as possible while maintaining the strength of the connecting part between the main shaft 16 and the hub 2.

A configuration of the hub 2 according to the present embodiment viewed from another direction will be described using FIG. 3. As described above, in the hub 2, the end of the fixed main shaft 19 and the fixed main shaft bearing 17 are provided closer to the center from the end of the hub 2. Further, the outer shell of the hub 2 and the barrier in the hub 2 are provided with the opening 18.

In the hub 2, it is possible to provide the pitch actuator 10 without interference with the barrier in the hub 2. Further, upon occurrence of failure or periodical replacement of the pitch actuator 10, the pitch actuator 10 is carried out from the hub 2 via these openings 18.

As described above, it is possible to attain downsizing and weight reduction of the hub while adopting the outer-ring drive type hub advantageous for downsizing and weight reduction of the nacelle by using the hub and its peripheral structure according to the present invention. It is possible to attain downsizing and weight reduction of the nacelle and the hub. As a result, it is possible to enable cost reduction regarding the nacelle and the hub.

Further, upon occurrence of failure or periodical replacement of the pitch actuator, the pitch actuator is carried out via the openings 18 in the outer shell of the hub 2 and in the structure in the hub 2. Accordingly, it is possible to improve the maintainability.

Note that in the above-described embodiment, the characteristic features of the present invention have been described by using mainly the hub of the outer-ring drive type wind power generation facility. Further, the present invention is applicable to the hub of the inner-ring drive type wind power generation facility. For example, when the structure in the hub of the inner-ring drive type wind power generation facility is provided with an opening and the pitch actuator is provided through the opening, it is possible to downsize the hub as much as possible without interference between the structure in the hub and the pitch actuator.

Further, when the pitch actuator is provided through a gap between plural structures in place of providing the opening in the structures in the hub, it is also possible to downsize the hub as much as possible without interference between the structure in the hub and the pitch actuator.

Note that the present invention is not limited to the above-described embodiment, and various modifications are included. For example, the above embodiment has been described in detail for explaining the present invention, and the present invention is not necessarily limited to an embodiment having all the described constituent elements. Further, some of constituent elements of an embodiment may be replaced with those of another embodiment. Further, constituent elements of an embodiment may be added to those of another embodiment. Further, it is possible to perform addition/deletion/replacement with respect to some of constituent elements of the respective embodiments with other constituent elements.

### [Reference Signs List]

- 1: blade,
- 2: hub,
- 3: nacelle,
- 4: gearbox,
- 5: power generator,
- 6: tower,
- 7: anemoscope & anemometer,
- 8: rotor brake,
- 9: yaw control mechanism,
- 10: pitch actuator,
- 11: pitch slewing bearing,
- 12: pitch control device,
- 13: electric power control device,
- 14: main circuit breaker,
- 15: wind turbine control panel,
- 16: main shaft,
- 17: fixed main shaft bearing,
- 18: opening,
- 19: fixed main shaft, and
- 20: main shaft bearing.

## Claims

1. A wind power generation facility comprising:
a tower (6) installed on the ground or on the sea as a supporting column of a power generator;
a nacelle (3), provided on the tower (6), that includes the power generator (5); and
a rotor, provided at one end of the nacelle (3), that has a hub (2) and a plurality of blades to receive wind and convert wind power into rotational energy,
wherein the hub (2) includes a plurality of pitch driving units to change respective angles of the plurality of blades with respect to the hub (2) and,
wherein the plurality of pitch driving units are respectively provided through an opening provided on a barrier in the hub (2),
wherein the wind power generation facility is an outer-ring drive type wind power generation facility having a cylindrical fixed main shaft (19) connecting the hub and the nacelle (3) via a bearing fixed to an outer shell of the hub, and a main shaft (16) provided through the inside of the fixed main shaft connecting the hub (2) and the power generator, in the hub (2), and
the barrier is a bearing support member to fix the bearing to the outer shell of the hub (2),
**characterized in that**
the outer shell of the hub (2) is formed in an approximately equilateral triangular shape in a cross section orthogonal to the fixed main shaft (19),
wherein the plurality of pitch driving units are respectively surrounded by the fixed main shaft and adjacent two sides of the approximately equilateral triangular shaped outer shell of the hub (2).

2. The wind power generation facility according to claim 1,
wherein in the hub (2), a connecting part between the hub and the main shaft is provided closer to the center of the hub (2), and
wherein an unloading port for carrying the pitch driving unit out of the hub is provided in the outer shell of the hub (2) between the end of the hub (2) and the connecting part between the hub and the main shaft.

3. The wind power generation facility according to claim 1 or 2, wherein an unloading port for carrying the pitch driving unit out of the hub (2) is provided in the bearing support member.

4. The wind power generation facility according to at least one of claims 1 to 3, wherein the bearing support member is provided on the outer shell of the hub (2) in the vicinity of an intermediate position between adjacent blades.

## Patentansprüche

1. Windkrafterzeugungsanlage, die Folgendes umfasst:
einen Turm (6), der auf dem Boden oder auf dem Meer als eine Stützsäule eines Leistungsgenerators installiert ist;
eine Gondel (3), die am Turm (6) vorgesehen ist und die den Leistungsgenerator (5) enthält; und
einen Rotor, der an einem Ende der Gondel (3) vorgesehen ist und der eine Nabe (2) und mehrere Rotorblätter besitzt, um Wind aufzunehmen und Windkraft in Rotationsenergie umzusetzen, wobei
die Nabe (2) mehrere Anstellwinkelansteuereinheiten enthält, um entsprechende Winkel der mehreren Rotorblätter in Bezug auf die Nabe (2) zu ändern, und
die mehreren Anstellwinkelansteuereinheiten jeweils durch eine Öffnung, die an einer Schwelle in der Nabe (2) vorgesehen ist, vorgesehen sind, wobei
die Windkrafterzeugungsanlage eine Windkrafterzeugungsanlage vom Au-ßenringantriebstyp ist, die eine feste zylindrische Hauptwelle (19), die die Nabe und die Gondel (3) über ein Lager, das an einer Außenhülle der Nabe befestigt ist, verbindet, und eine Hauptwelle (16), die durch das Innere der festen Hauptwelle, die die Nabe (2) und den Leistungsgenerator verbindet, in der Nabe (2) vorgesehen ist, besitzt, und
die Schwelle ein Lagertragelement ist, um das Lager an der Außenhülle der Nabe (2) zu befestigen,
**dadurch gekennzeichnet, dass**
die Außenhülle der Nabe (2) in einer annähernd gleichseitigen Dreiecksform in einem Querschnitt senkrecht zu der festen Hauptwelle (19) gebildet ist, wobei
die mehreren Anstellwinkelansteuereinheiten jeweils von der festen Hauptwelle umgeben und angrenzend an zwei Seiten der annähernd gleichseitig dreiecksförmigen Außenhülle der Nabe (2) sind.

2. Windkrafterzeugungsanlage nach Anspruch 1, wobei
in der Nabe (2) ein Verbindungsteil zwischen der Nabe und der Hauptwelle näher am Zentrum der Nabe (2) vorgesehen ist, und
eine Entladeöffnung, um die Anstellwinkelansteuereinheit aus der Nabe zu führen, in der Außenhülle der Nabe (2) zwischen dem Ende der Nabe (2) und dem Verbindungsteil zwischen der Nabe und der Hauptwelle vorgesehen ist.

3. Windkrafterzeugungsanlage nach Anspruch 1 oder 2, wobei eine Entladeöffnung, um die Anstellwinkelansteuereinheit aus der Nabe (2) zu führen, im Lagertragelement vorgesehen ist.

4. Windkrafterzeugungsanlage nach mindestens einem der Ansprüche 1 bis 3, wobei das Lagertragelement an der Außenhülle der Nabe (2) in der Nähe einer Zwischenposition zwischen benachbarten Rotorblättern vorgesehen ist.

## Revendications

1. Installation de génération d'énergie éolienne comprenant :
une tour (6) installée sur la terre ou en mer à titre de colonne de support d'un générateur d'énergie ;
une nacelle (3) prévue sur la tour (6), qui inclut le générateur d'énergie (5) ; et
un rotor, prévu à une extrémité de la nacelle (3), qui comprend un moyeu (2) et une pluralité de pales pour recevoir du vent et convertir la puissance du vent en énergie de rotation,
dans laquelle le moyeu (2) inclut une pluralité d'unités de pilotage de pas pour changer les angles respectifs de la pluralité de pales par rapport au moyeu (2) et
dans laquelle la pluralité d'unités de pilotage de pas sont respectivement prévues à travers une ouverture ménagée sur une barrière dans le moyeu (2),
dans laquelle l'installation de génération d'énergie éolienne est une installation de génération d'énergie éolienne du type à entraînement par bague extérieure ayant un arbre principal cylindrique fixe (19) qui connecte le moyeu et la nacelle (3) via un palier fixé sur une coque extérieure du moyeu, et un arbre principal (16) prévu à travers l'intérieur de l'arbre principal fixe connectant le moyeu (2) et le générateur d'énergie, dans le moyeu (2), et
la barrière est un élément de support de palier pour fixer le palier sur la coque extérieure du moyeu (2),
**caractérisée en ce que**
la coque extérieure du moyeu (2) est formée sous une forme approximativement triangulaire équilatérale dans une section transversale orthogonale à l'arbre principal fixe (19),
dans laquelle la pluralité d'unités de pilotage de pas sont respectivement entourées par l'arbre principal fixe et sont adjacentes à deux côtés de la coque extérieure, de forme triangulaire approximativement équilatérale, du moyeu (2).

2. Installation de génération d'énergie éolienne selon la revendication 1,
dans laquelle dans le moyeu (2), une partie de connexion entre le moyeu et l'arbre principal est prévue plus proche du centre du moyeu (2), et
dans laquelle un orifice de décharge pour transporter l'unité de pilotage de pas hors du moyeu est prévu dans la coque extérieure du moyeu (2) entre l'extrémité du moyeu (2) et la partie de connexion entre le moyeu et l'arbre principal.

3. Installation de génération d'énergie éolienne selon la revendication 1 ou 2, dans laquelle un orifice de décharge pour transporter l'unité de pilotage de pas hors du moyeu (2) est prévu dans l'élément de support de palier.

4. Installation de génération d'énergie éolienne selon l'une au moins des revendications 1 à 3, dans laquelle l'élément de support de palier est prévu sur la coque extérieure du moyeu (2) au voisinage d'une position intermédiaire entre des pales adjacentes.
